# EUROPÄISCHE PATENTANMELDUNG

(11) **EP 4 741 780 A1**
(43) Veröffentlichungstag der Anmeldung: **13.05.2026**
(21) Anmeldenummer: 25210660.4
(22) Anmeldetag: 23.10.2025
(51) Int. Cl.: G01J 1/44, G01J 1/02, H04L 9/08

(54) **PHOTONENDETEKTIONSVORRICHTUNG**

(30) Priorität: 12.11.2024 DE 102024133077
(71) Anmelder: duotec GmbH, 58553 Halver (DE)
(72) Erfinder: Venema, Boudewijn, 51688 Wipperfürth (DE); Raacke, Jens, 40822 Mettmann (DE); Gornik, Andreas, 58285 Gevelsberg (DE)
(74) Vertreter: Lippert Stachow Patentanwälte Rechtsanwälte

(57) **Zusammenfassung**

Die Erfindung betrifft eine Photonendetektionsvorrichtung 1 zur Detektion einzelner Photonen und Ausgabe eines Detektionssignals D, die Photonendetektionsvorrichtung 1 umfassend ein Gehäuse 2, 2' mit einem Gehäuseinnenraum 20, 20', in dem eine Einzelphotonendiode 3, 3', 3" und ein aktives Kühlelement 4, 4' angeordnet sind, wobei ein Kühlkörper 21, 21' zum Ableiten von Abwärme des Kühlelementes 4, 4'vorgesehen ist, wobei die Einzelphotonendiode 3, 3', 3" an einer ersten Seite des aktiven Kühlelements (40) angeordnet und der Kühlkörper 21, 21' an einer zweiten Seite des aktiven Kühlelements 41 angeordnet ist, und das Gehäuse 2, 2' ein optisches Eintrittselement 5, 5',aufweist, das zum Durchlassen eines ausgehend von der Umgebung der Photonendetektionsvorrichtung 1 auf das Eintrittselement 5, 5' auftreffenden Photons in den Gehäuseinnenraum 20, 20' ausgebildet ist, wobei die Photonendetektionsvorrichtung 1 eine an die Einzelphotonendiode 3, 3', 3" angeschlossene Vorverarbeitungseinheit 6, 6', 6" zur Umwandlung eines von der Einzelphotonendiode 3, 3', 3" ausgegebenen analogen Signals in ein Zwischensignal und eine an die Vorverarbeitungseinheit 6 angeschlossene Auswerteeinheit 7 zur Erzeugung des Detektionssignals D aus dem Zwischensignal der Vorverarbeitungseinheit 6 umfasst. Die Vorverarbeitungseinheit 6 und die Auswerteeinheit 7 sind in dem Gehäuseinnenraum 20, 20' der Photonendetektionsvorrichtung (1) angeordnet.

## Beschreibung

Die Erfindung betrifft eine Photonendetektionsvorrichtung zur Detektion einzelner Photonen und Ausgabe eines Detektionssignals, das als Information eine Angabe von Zeitpunkten von Detektionsereignissen umfasst, wobei ein Detektionsereignis der Detektion eines einzelnen Photons entspricht, die Photonendetektionsvorrichtung umfassend ein Detektorgehäuse mit einem Gehäuseinnenraum, in dem ein Photonendetektor, insbesondere eine Avalanche-Einzelphotonendiode, und ein aktives Kühlelement, insbesondere ein Peltierelement, angeordnet sind, wobei ein Kühlkörper zum Ableiten von Abwärme des Kühlelements an eine Umgebung des Detektorgehäuses vorgesehen ist, und der Kühlkörper zumindest abschnittsweise außerhalb des Gehäuseinnenraums angeordnet ist, wobei der Photonendetektor an einer ersten Seite des aktiven Kühlelements angeordnet und der Kühlkörper an einer zweiten Seite des aktiven Kühlelements angeordnet ist, und das Detektorgehäuse ein optisches Eintrittselement, insbesondere umfassend optisches Glas oder ein optisches Kristallmaterial, aufweist, das zum Durchlassen eines ausgehend von der Umgebung der Photonendetektionsvorrichtung auf das Eintrittselement auftretenden Photons in den Gehäuseinnenraum ausgebildet ist, wobei die Photonendetektionsvorrichtung eine an den Photonendetektor angeschlossene Vorverarbeitungseinheit zur Umwandlung eines von dem Photonendetektor ausgegebenen analogen Signals in ein analoges oder digitales Zwischensignal und optional eine an die Vorverarbeitungseinheit angeschlossene Auswerteeinheit zur Erzeugung des Detektionssignals aus dem digitalen Signal umfasst.

Optische Detektoren zum Nachweis geringster Lichtintensitäten, insbesondere Detektionsvorrichtungen zum Nachweis einzelner Photonen, werden zwischenzeitlich auf vielen Gebieten, beispielsweise in Analyseanwendungen der Biowissenschaft, z. B. bei Fluoressenz- und Lumineszenz-Messungen, in der Einzelmolekül-Spektroskopie, der konfokalen Mikroskopie, in industriellen Anwendungen wie einer Partikelgrößenbestimmung, in der Metrologie, in astronomischen Anwendungen wie LIDAR (Light Detection And Ranging) oder bei Quantenanwendungen wie in der Quantenoptik und der Quantenkryptographie benutzt. Ein wesentliches Problem derartiger Einzelphotonendetektionsvorrichtungen besteht in der Unterdrückung von, insbesondere thermisch hervorgerufenen Dunkelzählraten und der Minimierung von Todzeiten der Detektionsvorrichtung, welche in der Regel durch die notwendige Bereitstellung einer sehr hohen Verstärkung zur Erfassung eines einzelnen Photons und durch die notwendige Signalverarbeitung in der nachgeschalteten Elektronik verursacht sind.

Der vorliegenden Erfindung liegt die Aufgabe zugrunde, eine Photonendetektionsvorrichtung bereitzustellen, welche eine hohe Photonendetektionseffizienz mit geringer Totzeit der Vorrichtung bereitzustellen, ohne die Herstellungskosten im Vergleich zu herkömmlichen Photonendetektionsvorrichtungen zu erhöhen.

Diese Aufgabe löst die vorliegende Anmeldung zumindest teilweise mit einer Photonendetektionsvorrichtung mit den Merkmalen von Anspruch 1. Danach ist die erfindungsgemäße Photonendetektionsvorrichtung zur Detektion einzelner Photonen und Ausgabe eines Detektionssignals, das als Information eine Angabe von Zeitpunkten von Detektionsereignissen umfasst, wobei ein Detektionsereignis der Detektion eines einzelnen Photons entspricht, ausgebildet und umfasst ein Detektorgehäuse mit einem Gehäuseinnenraum, in dem ein Photonendetektor, insbesondere eine Avalanche-Einzelphotonendiode, und ein aktives Kühlelement, insbesondere ein Peltierelement angeordnet sind, wobei ein Kühlkörper zum Ableiten von Abwärme des Kühlelements an eine Umgebung des Detektorgehäuses, insbesondere der Photonendetektionsvorrichtung vorgesehen ist und der Kühlkörper zumindest abschnittsweise außerhalb des Gehäuseinnenraums angeordnet ist, wobei der Photonendetektor an einer ersten Seite des aktiven Kühlelements angeordnet und der Kühlkörper an einer zweiten Seite des aktiven Kühlelements angeordnet ist, und das Detektorgehäuse ein optisches Eintrittselement, insbesondere umfassend ein optisches Glas oder ein optisches Kristallmaterial, aufweist, das zum Durchlassen eines ausgehend von der Umgebung der Photonendetektionsvorrichtung auf das Eintrittselement auftreffenden Photons in den Gehäuseinnenraum ausgebildet ist, wobei die Photonendetektionsvorrichtung eine an den Photonendetektor angeschlossene Vorverarbeitungseinheit zur Umwandlung eines von dem Photonendetektor ausgegebenen analogen Signals, insbesondere eines analogen Pulssignals, in ein analoges oder digitales Zwischensignal und optional eine an die Vorverarbeitungseinheit angeschlossene Auswerteeinheit zur Erzeugung des Detektionssignals aus dem digitalen Signal umfasst. Die erfindungsgemäße Photonendetektionsvorrichtung zeichnet sich dadurch aus, dass neben dem Photonendetektor zumindest die Vorverarbeitungseinheit in dem Gehäuseinnenraum des Detektorgehäuses angeordnet ist, welche eingangsseitig mit dem Photonendetektor verbunden ist.

Der erfindungsgemäßen Photonendetektionsvorrichtung liegt die Idee zugrunde, zumindest die Vorverarbeitungseinheit nahe des eingangsseitig mit diesem verbundenen Photonendetektors innerhalb des Detektorgehäuses anzuordnen, um zum einen notwendige galvanische Verbindungen zwischen Photonendetektor und den diesem nachgeschalteten, die Ausgangssignale des Photonendetektors verarbeitenden Bauteile der Vorverarbeitungseinheit und damit Signallaufzeiten kurzzuhalten und darüber hinaus die Möglichkeit bereitzustellen, die Vorverarbeitungseinheit mit dem gleichen Kühlelement bzw. der gleichen Kühleinrichtung, d.h. einer gemeinsamen Kühleinrichtung zu kühlen, welche insofern neben elektronischen Bauteilen der Vorverarbeitungseinheit auch den Photonendetektor kühlt, um das Rauschverhalten der gesamten Photonendetektionsvorrichtung, insbesondere eventuell auftretende thermische Störungen bei der Verarbeitung der am Ausgang des Photonendetektors anliegenden Erfassungssignale zu vermindern.

Die Angabe "aktives Kühlelement" kann ein Kühlelement, d.h. eine Kühleinrichtung wie ein Peltierelement meinen, das zur Bereitstellung einer Kühlfunktion externe Energie, beispielsweise elektrische Energie, benötigt. Die Angabe "erste Seite des aktiven Kühlelements" kann insofern die kalte Seite des Kühlelements meinen, beispielsweise die kalte Seite eines Peltierelements. In gleicher Weise kann die Angabe "zweite Seite des aktiven Kühlelements" die warme Seite des Kühlelements, beispielsweise die warme Seite des Peltierelements meinen.

Je nach Ausführungsform kann das optische Eintrittselement, über welches zu erfassende Photonen in den Innenraum der Photonendetektionsvorrichtung eindringen, unterschiedlich gestaltet sein. Dieses kann beispielsweise als planparallele Platte oder als Keil ausgebildet sein, es ist jedoch auch möglich, dass das Eintrittselement als Linsenelement ausgebildet ist, beispielsweise als Abbildungslinse, mit welcher eine Eintrittsblende auf eine aktive Fläche der Einzelphotonendiode abbildbar ist.

Weiterbildungen der erfindungsgemäßen Photonendetektionsvorrichtung sowie zusätzliche vorteilsbehaftete Merkmale sind in der nachfolgenden allgemeinen Beschreibung, den Figuren, der Figurenbeschreibung sowie den weiteren Ansprüchen angegeben.

Der in der erfindungsgemäßen Photonendetektionsvorrichtung eingesetzte Photonendetektor kann insbesondere als Photodiode ausgebildet sein, z.B. als Einzelphotonen-Avalanche-Diode (SPAD), welche den inneren photoelektrischen Effekt zur Ladungsträgererzeugung und einen Lawinendurchbruch zur internen Verstärkung nutzt, die ohne Weiteres im Bereich von 10⁶ bis 10⁸ liegen kann. Demnach kann ein im Halbleitermaterial durch ein einzelnes Photon erzeugtes Elektron-Lochpaar aufgrund der beschriebenen Verstärkung eine Ladungsträgerlawine erzeugt werden, die zweckmäßigerweise durch nachfolgende Beschaltung gelöscht wird, um sicherzustellen, dass der Photonendetektor möglichst schnell wieder in den gesperrten Zustand übergeht. Vorzugsweise kann hier eine aktive Löschung ("active quenching") vorgesehen sein durch eine an sich bekannte Schaltanordnung für den Photonendetektor, mit welcher die Sperrspannung des Photonendetektors beim Erkennen eines Durchbruchstroms innerhalb eines Zeitraums im Bereich von 10⁻⁹ Sekunden aktiv abgesenkt wird. Diese aktive Schaltung ist ausgebildet und eingerichtet, nach der Absenkung durch erneutes Anheben der Sperrspannung über die Durchbruchsspannung die SPAD wieder in den aktiven Zustand zu versetzen.

Je nach Ausführungsform kann die signaltechnisch dem Photonendetektor nachgeschaltete Vorverarbeitungseinheit zumindest einen Vorverstärker, z.B. in Form eines Strom/Spannungswandlers wie eines Transimpedanzverstärker aufweisen, wobei der Vorverstärker in Form eines Strom/Spannungswandlers das von dem Photonendetektor bei einem Detektionsereignis abgegebene analoge Stromsignal in ein verstärktes, analoges Spannungssignal umwandelt. Nachfolgend ist die Lehre der vorliegenden Anmeldung so zu verstehen, dass mit der Angabe "Transimpedanzverstärker" allgemein ein verstärkender Strom/Spannungswandler gemeint sein kann, ohne dass der Photonendetektor im Wesentlichen im Kurzschluss betrieben sein muss. Beispielsweise kann ein solcher Strom/Spannungswandler grundsätzlich auch als mit Kopplungsverstärker ausgebildet sein.

In einer ersten Ausführungsform kann die Vorverarbeitungseinheit allein diesen Vorverstärker, insbesondere einen Transimpedanzverstärker aufweisen, wobei dieser ausgangsseitig ein analoges Zwischensignal an den Eingang einer Auswerteeinheit abgeben bzw. an diese angeschlossen sein kann, welche das analoge, von der Vorverarbeitungseinheit abgegebene analoge Spannungssignal in ein digitales Signal umwandelt, beispielsweise mittels einer A/D-Wandlereinrichtung, die insbesondere als Komparatoreinrichtung ausgebildet sein kann. Dabei kann dieses digitale Signal in einer nachfolgenden Verarbeitungsstufe der Auswerteeinheit in das Detektionssignal umgewandelt wird, das als Information eine Angabe von Zeitpunkten von Detektionsereignissen umfasst.

In einer weiteren Ausführungsform kann auch vorgesehen sein, dass die Vorverarbeitungseinheit an ihrem Ausgang als Zwischensignal ein digitales Signal abgibt, das von der, der Vorverarbeitungseinheit nachgeschalteten Auswerteeinheit dann in das beschriebene Detektionssignal der erfindungsgemäßen Photonendetektionsvorrichtung umgewandelt wird. In dieser Ausführungsform kann die Vorverarbeitungseinheit demnach zumindest den beschriebenen Vorverstärker sowie an dessen Ausgang die Schaltung zur Wandlung des analogen Spannungssignals in ein digitales Signal, z.B. aufweisend eine A/D-Wandlereinrichtung, insbesondere in Form einer Komperatorschaltung, umfassen, so dass die der Vorverarbeitungseinheit nachgeschaltete Auswerteeinheit eingangsseitig schon ein digitales Zwischensignal zur Weiterverarbeitung und Erzeugung des Detektionssignals erhält.

Wie dargestellt, umfasst die erfindungsgemäße Photonendetektionsvorrichtung eine Vorverarbeitungseinheit, die in dem Gehäuseinnenraum des Detektorgehäuses des Photonendetektors angeordnet ist. Dabei kann diese Vorverarbeitungseinheit wie beschrieben allein den Vorverstärker aufweisen. Erfindungsgemäß kann jedoch auch vorgesehen sein, dass die im Detektorgehäuse befindliche Vorverarbeitungseinheit neben dem Vorverstärker auch den Vorverstärker an dessen Ausgang nachgeschaltete Schaltungen, wie eine Hochpassfilterschaltung und gegebenenfalls eine A/D-Wandlerschaltung bzw. Komparatorschaltung zur Wandlung des vom Vorverstärker ausgegebenen analogen Signals in ein digitales Signal, das eingangsseitig an einer Auswerteeinheit, die insbesondere außerhalb des Detektorgehäuses der erfindungsgemäßen Photonendetektionsvorrichtung angeordnet sein kann, angeschlossen ist zur Ermittlung der gesuchten Detektionssignale, die als Information eine Angabe von Zeitpunkten von Detektionsereignissen umfassen.

Erfindungsgemäß kann vorgesehen sein, dass der Photonendetektor als Einzelphotonendetektor, insbesondere als Avalanche-Einzelphotonendiode ausgebildet ist. Zweckmäßigerweise kann vorgesehen sein, dass die Vorverarbeitungseinheit an der ersten Seite, d. h. der kalten Seite des aktiven Kühlelements angeordnet ist, d.h. dass die Vorverarbeitungseinheit zur Kühlung thermisch an das aktive Kühlelement angekoppelt ist. In dieser Ausführungsform sind insofern der Photonendetektor als auch die Vorverarbeitungseinheit zum Kühlen an das aktive Kühlelement angekoppelt. Es kann jedoch auch vorgesehen sein, dass neben der Vorverarbeitungseinheit, welche ausgangsseitig ein analoges oder digitales Zwischensignal ausgibt, auch die Auswerteeinheit, d. h. beide Signal-Verarbeitungseinheiten an die erste Seite, die kalte Seite des aktiven Kühlelements angekoppelt sind, so dass in dieser Ausführungsform der erfindungsgemäßen Photonendetektionsvorrichtung die Bauelemente zur Erfassung des einzelnen Photons bis zur Verarbeitung des Diodensignals zum Detektionssignal über das aktive Kühlelement gekühlt werden zur Minimierung etwaiger thermischer Einflüsse auf die Ermittlung des Detektionssignals. In dieser Ausführungsform kann insofern vorgesehen sein, dass auch die Auswerteeinheit innerhalb des Detektorgehäuses angeordnet ist.

Zur Optimierung der Kühlung der elektronischen Bauelemente kann das Kühlelement bzw. die Kühleinrichtung eine Mehrzahl von aktiven Kühlelementeinheiten, d.h. Kühlstufen umfassen, die kaskadiert hintereinander geschaltet sein können zur Erhöhung der bereitgestellter Kühlleistung. Dabei kann vorgesehen sein, dass insbesondere eine der aktiven Kühlelementeinheiten die erste Seite des aktiven Kühlelements bereitstellt und eine andere der aktiven Kühlelementeinheiten die zweite Seite des aktiven Kühlelements bzw. der Kühleinrichtung bereitstellt. Das Kühlelement kann insofern mehrere Kühlstufen in Form von Kühlelementeinheiten aufweisen, die seriell hintereinander angeordnet sind. Zweckmäßigerweise kann das aktive Kühlelement für die erfindungsgemäße Photonendetektionsvorrichtung zwei oder drei, in bestimmten Anwendungen auch eine größere Anzahl von hintereinander geschalteten Kühlelementeinheiten umfassen.

Beispielsweise kann vorgesehen sein, dass die aktiven Kühlelementeinheiten jeweils eine Wärmeabgabeseite (zweite Seite) und eine Wärmeaufnahmeseite (erste Seite) aufweisen und wobei eine erste der aktiven Kühlelementeinheiten mit ihrer Wärmeabgabeseite mit der Wärmeaufnahmeseite der Mehrzahl von aktiven Kühlelementeinheiten thermisch verbunden ist, wobei insbesondere der Photonendetektor an der Wärmeaufnahmeseite (kalte Seite) der ersten aktiven Kühlelementeinheit angeordnet bzw. mit dieser thermisch gekoppelt ist und/oder die Wärmeabgabeseite der zweiten aktiven Kühlelementeinheit eine größere Oberfläche aufweist als die Wärmeaufnahmeseite der ersten aktiven Kühlelementeinheit. Dadurch, dass die Oberfläche einer Kühlelementeinheit, welche der Kühlelementeinheit nachfolgt die thermisch nächstgelegen zum Photonendetektor angeordnet ist, größer ist als die Oberfläche der zweitgenannten Kühlelementeinheit, kann zum einen das Bauvolumen im Bereich des Photonendetektors vermindert, andererseits jedoch durch die Vergrößerung der Oberfläche einer nachfolgenden Kühlelementeinheit die Kühlleistung des gesamten Kühlelements bzw. der Kühleinrichtung vergrößert werden.

Vorzugsweise kann die Gestaltung der Photonendetektionsvorrichtung derart sein, dass der Gehäuseinnenraum einen durch das aktive Kühlelement gekühlten, insbesondere vom restlichen Gehäuseinnenraum thermisch isolierten, Detektionsbereich aufweist, wobei der Photonendetektor in diesem Detektionsbereich angeordnet ist.

Zweckmäßigerweise kann damit erreicht werden, dass die zur Verfügung stehende Kühlleistung auf den Bereich innerhalb des Innenraums konzentriert werden kann, in welchem die Einzelphotonendiode und gegebenenfalls die Vorverarbeitungseinheit angeordnet sind zur Kühlung der Temperaturempfindlichsten Abschnitte innerhalb der Photonendetektionsvorrichtung. Insofern kann vorgesehen sein, dass die Vorverarbeitungseinheit in dem Detektionsbereich des Gehäuseinnenraums angeordnet ist, wobei insbesondere die Auswerteeinheit zur Verarbeitung des analogen oder digitalen Zwischensignals der Vorverarbeitungseinheit außerhalb des Detektionsbereichs im Gehäuseinnenraum angeordnet sein kann. Es hat sich herausgestellt, dass thermische Einflüsse nach der Vorverarbeitung des Diodensignals in einem zur Umgebung der Photonendetektionsvorrichtung gekühlten Bereich in ein analoges oder digitales Signal eine nachfolgende Verarbeitung in der Auswerteeinheit nicht mehr temperaturkritisch ist und insofern außerhalb eines Höchstkühlbereichs im oder außerhalb des Gehäuseinnenraums durchgeführt werden kann.

Je nach Ausführungsform kann jedoch auch die Auswerteeinheit der erfindungsgemäßen Photonendetektionsvorrichtung innerhalb dieses Detektionsbereiches angeordnet sein, d.h. im gleichen Kühlbereich bzw. dem gleichen Kühlniveau wie der Photonendedektor und die Vorverarbeitungseinheit.

Zweckmäßigerweise kann der Photonendetektor und/oder die elektronischen Bauteile der Vorverarbeitungseinheit und/oder die elektronischen Bauteile der Auswerteeinheit auf einer Leiterplatte bzw. einem Leiterplattenabschnitt angeordnet sein, z.B. einer Leiterplatte bzw. einem Leiterplattenabschnitt umfassend ein hochwärmeleitfähiges Material, insbesondere mit einer Wärmeleitfähigkeit > 1 W/m*K. Vorzugsweise weist insbesondere ein Leiterplattenabschnitt oder eine Leiterplatte, auf welchem bzw. welcher die Einzelphotonendiode angeordnet ist, ein Leiterplattenmaterial umfassend Keramik auf oder ist daraus hergestellt, um die Kühlung des Photonendetektors durch thermische Ankopplung an das Kühlelement zu optimieren.

Es hat sich für die erfindungsgemäße Photonendetektorvorrichtung insbesondere als vorteilhaft herausgestellt, wenn sowohl der Photonendetektor als auch zumindest ein elektronisches Bauteil der Vorverarbeitungseinheit innerhalb des Detektionsbereichs im Gehäuseinnenraum des Detektorgehäuses angeordnet ist, d. h. insbesondere auf einer Leiterplatte bzw. einem Leiterplattenabschnitt angeordnet ist umfassend ein hoch wärmeleitfähiges Material wie Keramik, die bzw. der durch das aktive Kühlelement gekühlt ist, d. h. thermisch an das aktive Kühlelement angekoppelt ist. Vorzugsweise kann vorgesehen sein, dass darüber hinaus ein Temperatursensor im thermischen Kontakt zur Leiterplatte bzw. zum Leiterplattenabschnitt des Photonendetektors angeordnet ist zur Erfassung der Temperatur der aktiv gekühlten Leiterplatte bzw. Leiterplattenabschnitts des Photonendetektors und/oder zur Ermittlung einer Temperatur des Photonendetektors. Dabei können die weiteren elektronische Bauteile der Vorverarbeitungseinheit und/oder zumindest einige der elektronischen Bauteile der Auswerteeinheit auch innerhalb des Gehäuseinnenraums auf einer weiteren zugeordneten Leiterplatte bzw. einem weiteren zugeordneten Leiterplattenabschnitt angeordnet sein, die bzw. der jedoch nicht thermisch an das aktive Kühlelement angekoppelt ist, sondern stattdessen isoliert, beispielsweise beabstandet zur Leiterplatte bzw. dem Leiterplattenabschnitt des Photonendetektors sowie des zumindest einen Bauteils der Vorverarbeitungseinheit angeordnet ist. Bei der erfindungsgemäßen Photonendetektionsvorrichtung kann vorgesehen sein, dass die innerhalb des Detektorgehäuses angeordneten elektronischen Bauteile angeordnet und eingerichtet sind, ausgehend von den Ausgangssignalen des Photonendetektors eine Abfolge von Detektionsereignissen in Form einer digitalen Pulsfolge an einem Ausgang des Detektorgehäuses auszugeben, bei welcher ein jeweiliger Abstand zwischen benachbarten Pulsen ein Maß für den realen zeitlichen Abstand dieser Pulse darstellt.

Dabei kann die erfindungsgemäße Photonendetektionsvorrichtung eine außerhalb des Detektorgehäuses angeordnete Teilschaltung der Auswerteeinheit umfassen, die angeordnet und ausgebildet ist, zumindest einem der Pulse der digitalen Pulsfolge am Ausgang eine Zeitpunktreferenz zuzuordnen, beispielsweise auf der Grundlage von empfangenen GPS-Signalen, und damit ein Detektionssignal bereitzustellen, das als Information eine Angabe von Zeitpunkten von Detektionsereignissen umfasst, wobei ein Detektionsereignis der Detektion eines einzelnen Photons entspricht.

Vorzugsweise kann vorgesehen sein, dass der Photonendetektor an einer ersten Seite eines ersten Leiterplattenabschnitts einer Leiterplattenanordnung, insbesondere eines ersten Leiterplattenabschnitts, angeordnet ist, wobei eine zweite Seite des ersten Leiterplattenabschnitts an der ersten Seite des aktiven Kühlelements angeordnet ist und wobei ferner auch die Vorverarbeitungseinheit an dem ersten Leiterplattenabschnitt der Leiterplattenanordnung angeordnet sein kann.

Zweckmäßigerweise kann dabei vorgesehen sein, dass der ersten Leiterplattenabschnitt den obenstehend beschriebenen Detektionsbereich festlegt, in welchem die erfindungsgemäße Photonendetektionsvorrichtung eine besonders effektive Kühlung der in diesem Bereich angeordneten elektronischen Bauelemente, insbesondere die Einzelphotonendiode und die elektronischen Bauelemente der Vorverarbeitungseinheit erfahren können.

In einer Ausführungsform, bei welcher der Photonendetektor und die Vorverarbeitungseinheit innerhalb des Detektionsbereichs, d. h. in einem Höchstkühlbereich des Gehäuseinnenraums angeordnet sind, kann vorgesehen sein, dass die Auswerteeinheit an einem, insbesondere Keramik umfassenden oder daraus hergestellten, zweiten Leiterplattenabschnitt der Leiterplattenanordnung angeordnet ist, der bzw. die insbesondere beabstandet zum ersten Leiterplattenabschnitt angeordnet sein kann. Eine solche Entkopplung von erstem und zweitem und gegebenenfalls drittem Leiterplattenabschnitt kann zweckmäßig sein, da zum Betrieb der Auswerteeinheit Temperatureinflüsse eher vernachlässigbar sind.

In einer weiteren Ausführungsform kann jedoch auch vorgesehen sein, die Leiterplattenanordnung durch das Bereitstellen einer einzelnen durchgehenden Leiterplatte zu realisieren, auf welcher sowohl die Einzelphotonendiode als auch die Vorverarbeitungseinheit und die Auswerteeinheit bzw. deren elektronischen Bauteile angeordnet sind, so dass Einzelphotonendiode, Vorverarbeitungseinheit und Auswerteeinheit im Wesentlichen auf einem gleichen Temperaturniveau innerhalb des Detektorgehäuses durch das Kühlelement gehalten werden. Dabei kann vorgesehen sein, dass nur der Leiterplattenabschnitt der Leiterplattenanordnung, welcher den Photonendetektor und die Vorverarbeitungseinheit trägt, thermisch direkt, d. h. unmittelbar an das Kühlelement angekoppelt ist und insofern die Auswerteeinheit bzw. deren elektronischen Bauelemente nicht mittels eines direkten Kontakts der sie tragenden Leiterplatte mit dem Kühlelement gekühlt werden, sondern über eine Wärmeleitung innerhalb der Leiterplatte zwischen dem, die Auswerteeinheit tragenden zweiten und gegebenenfalls dritten Leiterplattenabschnitt und dem, den Photonendetektor und die Auswerteeinheit tragenden ersten Leiterplattenabschnitt, welcher an seiner Rückseite (zweite Seite) direkt an die kalte Seite des Kühlelements angekoppelt ist.

In einer weiteren Ausführungsform kann auch vorgesehen sein, den Photonendetektor bzw. die Photodiode direkt, d. h. ohne Zwischenschaltung einer zugeordneten Leiterplatte an der kalten Seite des aktiven Kühlelements, d.h. der aktiven Kühleinrichtung anzuordnen, womit Bauvolumen eingespart werden kann und darüber hinaus eine besonders gute Wärmekopplung zwischen dem Kühlelement und dem Photonendetektor bereitgestellt werden kann. In dieser Ausführungsform kann vorgesehen sein, dass zumindest die Vorverarbeitungseinheit bzw. deren Bauelemente auf einer zugeordneten Leiterplatte angeordnet sind, die dann in direktem Kontakt mit dem Kühlelement angeordnet ist. Eine elektrische Verbindung zwischen dem Ausgang des Photonendetektors bzw. der Photodiode und dem Eingang der Vorverarbeitungseinheit kann beispielsweise über eine entsprechende Verdrahtung durchgeführt sein.

In solchen Ausführungsformen, bei welchen erster und zweiter sowie gegebenenfalls dritter Leiterplattenabschnitt der Leiterplattenanordnung voneinander beabstandet angeordnet sind, kann zweckmäßigerweise vorgesehen sein, dass innerhalb des Beabstandungsabschnittes ein thermischer Isolationsabschnitt angeordnet ist, insbesondere umfassend ein Gas oder ein Vakuum zum thermischen Isolieren der zumindest beiden Leiterplattenabschnitte innerhalb des Beabstandungsbereiches.

Zweckmäßigerweise kann vorgesehen sein, dass der besagte Detektionsbereich von der Leiterplatte, insbesondere dem ersten Leiterplattenabschnitt, von dem Eintrittselement sowie von zwischen der Leiterplattenanordnung und dem Eintrittselement angeordneten Seitenwänden begrenzt ist, wobei insbesondere der Detektionsbereich gasdicht von dem restlichen Gehäuseinnenraum isoliert angeordnet sein kann. Dabei kann der Detektionsbereich als Isolationsmedium, insbesondere ein Gas umfassen. Darüber hinaus ist es auch möglich, den Detektionsbereich fluidleer mit einem Vakuum zu gestalten.

Zur weiteren Isolation des Gehäuseinnenraums, insbesondere des Detektionsbereichs der erfindungsgemäßen Photonendetektionsvorrichtung kann vorgesehen sein, die angegebenen, sich von lateralen Stirnseitenabschnitten des optischen Eintrittselements, insbesondere zueinander parallel erstreckenden Seitenwände, eine Mehrschichtanordnung aufweisen zur Bereitstellung einer thermischen und gasdichten Isolation des Detektionsbereichs zur Umgebung der Photonendetektionsvorrichtung. Diese Mehrschichtanordnung kann beispielsweise durch zwei in Dickenrichtung der Seitenwände beabstandete Wandabschnitte gestaltet sein, wobei zwischen diesen Wandabschnitten eine Isolationsschicht, insbesondere umfassend ein Gas oder ein Vakuum, angeordnet sein.

In einer Ausführungsform der erfindungsgemäßen Photonendetektionsvorrichtung mit einem vergleichsweisen einfachen Aufbau kann vorgesehen sein, dass der Gehäuseinnenraum nicht aufgeteilt, sondern einen einzelnen Bereich, den Detektionsbereich aufweist, welcher durch das optische Eintrittselement, Seitenwandabschnitte und das Kühlelement beschränkt bzw. festgelegt ist. Auch in dieser Ausführungsform kann der Innenbereich des Detektorgehäuses mit einem Isolationsmedium, insbesondere einem Gas gefüllt sein oder fluidleer mit einem Vakuum gestaltet sein, zur thermischen Isolierung bzw. zur Vermeidung von Kondensationseffekten innerhalb des Detektorgehäuses. Die weiteren, obenstehend erläuterten Gestaltungen der Photonendetektionsvorrichtung können auch bei dieser Photonendetektionsvorrichtung mit einem vergleichsweisen einfachen Aufbau mit nicht aufgeteiltem Gehäuseinnenraum umgesetzt sein. Insbesondere vorgesehen sein, dass die im Gehäuseinnenraum des Detektorgehäuses angeordnete Vorverarbeitungseinheit einen an den Ausgang des Photonendetektors angeschlossenen Vorverstärker, insbesondere ein Transimpedanzwandler, zur Ermittlung eines analogen Zwischensignals umfasst, während weitere, das Zwischensignal weiterverarbeitende Schaltungen außerhalb des Detektorgehäuses in der Auswerteeinheit angeordnet sein können, welche ausgangsseitig das Detektionssignal ausgibt.

Zweckmäßigerweise kann vorgesehen sein, dass die Vorverarbeitungseinheit der erfindungsgemäßen Photonendetektionsvorrichtung zumindest einen dem Ausgang des Photonendetektors nachgeschalteter Vorverstärker wie eines Transimpedanzverstärkers aufweist, der ein von dem Photonendetektor am Ausgang ausgegebenes Stromsignal in ein verstärktes Spannungssignal umwandelt. Darüber hinaus kann die Vorverarbeitungseinheit einen Komparator zur Wandlung des analogen Ausgangssignals des Vorverstärkers in ein digitales Signal aufweisen sowie gegebenenfalls einen Temperatursensor, insbesondere zur Erfassung einer Temperatur im Detektionsbereich, vorzugsweise im Bereich bzw. an dem Photonendetektor.

Wie dargestellt, kann die Vorverarbeitungseinheit ein analoges Signal des Vorverstärkers, insbesondere des Transimpedanzwandlers ausgeben zur weiteren Verarbeitung in der Auswerteeinheit. Es kann jedoch auch vorgesehen sein, dass die Vorverarbeitungseinheit eine dem Vorverstärker nachgeschaltete Schaltung zur Erzeugung eines digitalen Signals aus dem vom Vorverstärker bzw. Transimpedanzwandler ausgegebenen analogen Signals, insbesondere mittels A/D-Wandlers wie eines Komparators aufweist, wobei in dieser Ausführungsform ein digitales Eingangssignal am Eingang der Auswerteeinheit anliegt. In beiden Ausführungsformen kann die Auswerteeinheit zur Weiterverarbeitung eines digitalen Signals zur Ermittlung eines Detektionssignals, das als Information eine Angabe von Zeitpunkten von Detektionsereignissen umfasst, einen Mikroprozessor und/oder einen programmierbaren, integrierten Schaltkreis (FPGA: Field Programmable Gate Array) aufweisen, zur Verarbeitung des entweder von der Vorverarbeitungseinheit abgegebenen oder in der Auswerteeinheit bestimmten digitalen Zwischensignals zu dem Detektionssignal der erfindungsgemäßen Photonendetektionsvorrichtung.

Insbesondere für Anwendungen im Bereich der Quantenkryptographie kann es zweckmäßig sein, bei der Gestaltung der erfindungsgemäßen Photonendetektionsvorrichtung Maßnahmen zu ergreifen, um Manipulationen an der erfindungsgemäßen Vorrichtung zu verhindern. Zu diesem Zweck kann vorgesehen sein, dass das Gehäuse der erfindungsgemäßen Photonendetektionsvorrichtung eine Selbstzerstörungsvorrichtung, insbesondere umfassend eine Sollbruchstelle und eine in Wirkverbindung mit der Sollbruchstelle stehende Auslöseeinrichtung aufweist, wobei die Selbstzerstörungsvorrichtung eingerichtet und ausgebildet ist, bei einem Öffnen des Gehäuses der Photonendetektionsvorrichtung zumindest eine der im Gehäuse angeordneten Komponenten, insbesondere die Auswerteeinheit, der Photonendetektionsvorrichtung zu zerstören. Beispielsweise kann die Auslöseeinrichtung ein von außen zugänglicher Abschnitt der Photonendetektionsvorrichtung sein, auf welchen bei Öffnungsversuchen eine Öffnungskraft ausübbar ist, wobei die Auslöseeinrichtung mechanisch mit der Sollbruchstelle gekoppelt ist, die beispielsweise einen elektrischen Leiterabschnitt aufweisen kann, welcher durch Einwirkung der äußeren Kraft aufbricht, wodurch die beispielhaft genannte Auswerteeinheit oder eine Schaltungskomponente daraus funktionsunfähig wird. Es liegt jedoch auch im Rahmen der Erfindung, eine Auslöseeinrichtung vorzusehen, die bei einem unzulässigen Öffnungsversuch an der Vorrichtung einen elektrischen Stromfluss aus einem im Innern der Vorrichtung angeordneten elektrischen Speicher freischaltet, der eine innerhalb einer elektronischen Schaltung der Vorrichtung, insbesondere einem Schaltungsabschnitt der Vorverarbeitungseinheit und/oder der Auswerteeinheit angeordnete Schmelzsicherung zerstört und damit die erfindungsgemäße Photonendetektionsvorrichtung funktionsunfähig macht.

Insbesondere zur Verwendung in der Quantenkryptographie kann die erfindungsgemäße Photonendetektionsvorrichtung eingerichtet und ausgebildet sein, Photonen mit zwei zueinander senkrecht orientierten Polarisationen zu erfassen, so dass durch die Verwendung zweier derartiger Photonendetektionsvorrichtungen zur Messung von Einzelphotonen unter vier unterschiedlichen Polarisationsrichtungen eine notwendige Information ermittelbar ist, um beispielsweise durch die Messung an miteinander verschränkten Photonen zwischen zwei Kommunikationsstellen einen mittel Quantenkryptographie ermittelten Schlüssel abhörsicher festzulegen, beispielsweise mittels des von Artur Eckert festgelegten Protokolls E91. Insbesondere für eine solche Anwendung kann die erfindungsgemäße Photonendetektionsvorrichtung in dem Gehäuse zumindest einen weiteren Photonendetektor, insbesondere eine Avalanche-Einzelphotonendiode aufweisen, wobei der zweite Detektor an der ersten Seite des aktiven Kühlelements angeordnet sein kann, und ferner ein optischer Strahlteiler mit einem optischen Eingang und zwei optischen Ausgängen, der beispielsweise als 50-50- oder als polarisierender Strahlteiler ausgebildet sein kann, wobei der optische Eingang des Strahlteilers in Photonenrichtung hinter dem optischen Eintrittselement angeordnet ist und wobei der erste Ausgang des Strahlteilers optisch vor dem ersten Photonendetektor und der zweite Ausgang des Strahlteilers optisch vor dem weiteren Photonendetektor angeordnet ist. Dabei weist diese

Photonendetektionsvorrichtung eine an den weiteren Photonendetektor angeschlossene weitere Vorverarbeitungseinheit zur Umwandlung eines von dem weiteren Photonendetektor ausgegebenen analogen Signals in ein weiters Zwischensignal auf, wobei die Vorverarbeitungseinheit an die für beide Photonendetektoren gemeinsame Auswerteeinheit zur Erzeugung eines weiteren Detektionssignals aus dem weiteren digitalen Signal angeschlossen sein kann. Zweckmäßigerweise weisen die beiden Photonendetektoren dieser erfindungsgemäßen Photonendetektionsvorrichtung jeweils getrennte Vorverarbeitungseinheiten auf, während deren Ausgänge beide auf eine gemeinsame Auswerteeinheit aufschaltbar sind zur Ermittlung eines Gesamtdetektionssignals, das als Information eine Angabe von Zeitpunkten von Detektionsereignissen beider Photonendetektoren bzw. der zugeordneten beiden Polarisationsrichtungen umfasst.

Zweckmäßigerweise kann dabei vorgesehen sein, dass sowohl beide Photonendetektoren als auch die sich signaltechnisch daran anschließenden Vorverarbeitungseinheiten an einem gemeinsamen Kühlelement thermisch angekoppelt sind. In einer weiteren Ausführungsform kann auch vorgesehen sein, dass für jede der beiden Photonendetektoren und die jeweils zugehörige Vorverarbeitungseinheit ein jeweils zugeordnetes getrenntes aktives Kühlelement angeordnet ist.

Die obenstehend angegebene technische Aufgabe löst die vorliegende Erfindung darüber hinaus mit einem Verfahren zur Detektion einzelner Photonen und zur Ausgabe eines Detektionssignals, das als Information eine Angabe von Zeitpunkten von Detektionsereignissen enthält, wobei ein Detektionsereignis der Detektion eines einzelnen Photons an einem Photonendetektor einer Photonendetektionsvorrichtung entspricht. Dabei wird durch den Photonendetektor ein dem Detektionsereignis zugeordnetes analoges Detektionssignal beim Auftreffen eines Photons auf die Einzelphotonendiode erzeugt und dieses analoge Detektionssignal an eine Vorverarbeitungseinheit übermittelt, wobei durch die Vorverarbeitungseinheit ein digitales oder analoges Zwischensignal aus dem analogen Diodensignal erzeugt wird und dieses Zwischensignal an eine Auswerteeinheit übermittelt wird, wobei das Zwischensignal durch die Auswerteeinheit zur eindeutigen Zuordnung von Informationen über den Zeitpunkt des Detektionsereignisses des einzelnen Photons zu diesem Detektionsereignis verarbeitet wird und wobei zumindest die Vorverarbeitungseinheit und der Photonendetektor durch ein aktives Kühlelement gekühlt werden.

Zur Optimierung der Erzeugung eines möglichst rauschminierten Detektionssignals und zur Minimierung der Baugröße der erfindungsgemäßen Photonendetektionsvorrichtung kann zweckmäßigerweise vorgesehen sein, dass die Vorverarbeitungseinheit durch das aktive Kühlelement stärker gekühlt wird als die Auswerteeinheit oder die Auswerteeinheit ungekühlt angeordnet ist.

Insbesondere bei Photonendetektionsvorrichtungen, die zur Erfassung von einzelnen Photonen in zueinander unterschiedlichen Polarisationsrichtungen ausgebildet sind, kann zweckmäßigerweise vorgesehen sein, dass ein optischer Strahlteiler, eine Mehrzahl, insbesondere zwei, Photonendetektoren, jeweils zugeordnete Vorverarbeitungseinheiten und eine Auswerteeinheit in einem gemeinsamen Gehäuse angeordnet werden. In einer weiteren Ausführungsform kann auch vorgesehen sein, die Auswerteeinheit außerhalb des gemeinsamen Gehäuses anzuordnen.

Die Erfindung betrifft ferner eine Vorrichtung zur Festlegung eines Quantenschlüssels durch Detektion von einzelnen Photonen umfassend eine Mehrzahl von Photonendetektionsvorrichtungen nach einem der obenstehend beschriebenen Gestaltungen.

Die Erfindung wird im Folgenden durch das Beschreiben einiger Ausführungsformen von erfindungsgemäß gestalteten Photonendetektionsvorrichtungen nebst Abwandlungen unter Bezugnahme auf die beiliegenden Zeichnungen erläutert, wobei
- Figur 1: eine erste Ausführungsform einer erfindungsgemäß ausgebildeten Photonendetektionsvorrichtung in einer Prinzipdarstellung,
- Figur 2: in einer Prinzipdarstellung eine beispielhafte, in der Photonendetektionsvorrichtung der Figur 1 angeordnete Schaltungsanordnung zur Ermittlung eines Detektionssignals aus einem Erfassungssignal einer Einzelphotonendiode, das als Information eine Angabe von Zeitpunkten von Detektionsereignissen von Photonen an einer Einzelphotonendiode darstellt,
- Figur 3: eine weitere, im Vergleich zur Photonendetektionsvorrichtung der Figur 1 leicht abgewandelte Photonendetektionsvorrichtung,
- Figur 4: eine weitere, in Bezug auf den Aufbau zur Photonendetektionsvorrichtung der Figur 1 vereinfachte erfindungsgemäße Photonendetektionsvorrichtung, und
- Figur 5: eine dritte Ausführungsform einer erfindungsgemäßen Photonendetektionsvorrichtung in einer Prinzipdarstellung zur Detektion von Photonen unter Differenzierung ihrer Polarisierungen
zeigt.

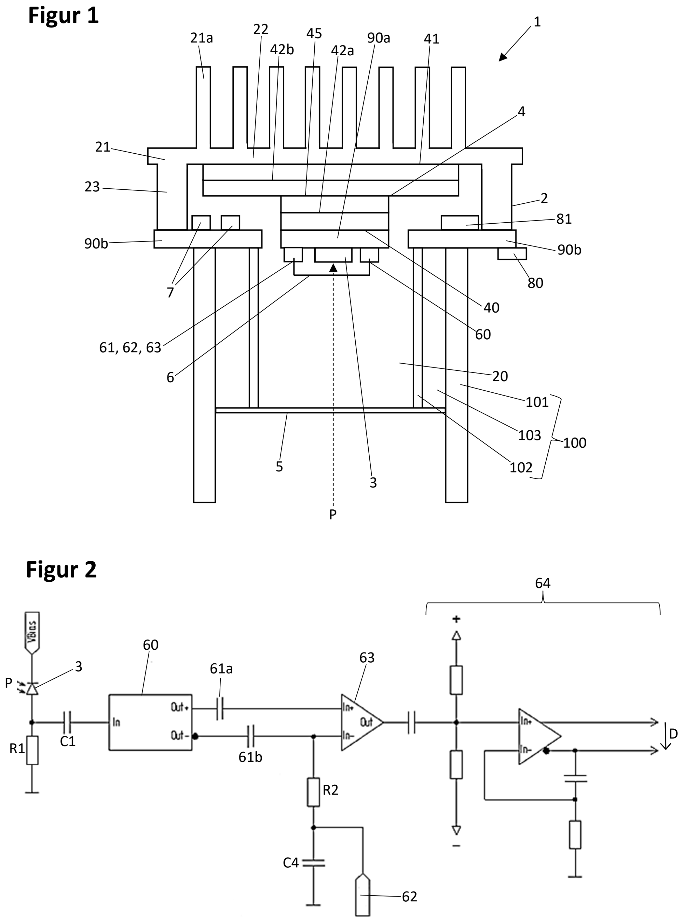

Die nachfolgend beschriebenen erfindungsgemäß ausgebildeten Photonendetektionsvorrichtungen sind insbesondere im Bereich der Quantenkryptographie einsetzbar. Eine derartige Vorrichtung ist in Figur 1 in einer Prinzipdarstellung angegeben. Diese ist ausgebildet zur Detektion einzelner Photonen und zur Ausgabe eines Detektionssignals, das als Information eine Eingabe von Zeitpunkten von Detektionsereignissen umfasst, wobei ein Detektionsereignis der Detektion eines einzelnen Photons entspricht bzw. die Detektion eines einzelnen Photons darstellt.

Dabei kann die erfindungsgemäße Photonendetektionsvorrichtung 1 ein Gehäuse 2 umfassen, das einen Gehäuseinnenraum 20 festlegt, in welchem eine Mehrzahl von miteinander verschalteten elektrischen Bauelementen angeordnet sind. Dies betrifft zum einen das photonensensitive Bauelement, eine Einzelphotonendiode 3, welche insbesondere als Avalanche-Einzelphotonendiode (SPAD) ausgebildet sein kann und die in der beschriebenen Ausführungsform auf einem ersten Keramik-Leiterplattenabschnitt 90a angeordnet sein kann, die hier darüber hinaus eine Vorverarbeitungseinheit 6 trägt, welche eine Mehrzahl von elektronischen Bauelementen umfasst zur Vorverarbeitung des von der Einzelphotonendiode 3 ausgegebenen Ausgangssignals bei einer Photonenerfassung, worauf untenstehend noch näher eingegangen wird. Die Einzelphotonendiode 3 und die Vorverarbeitungseinheit 6 können an einer ersten Seite des ersten Leiterplattenabschnitts 90a angeordnet sein, während die gegenüberliegende, zweite Seite des Leiterplattenabschnitts 90a an einer ersten Seite 40, d. h. der kalten Seite eines Kühlelements 4 anliegt bzw. mit diesem thermisch gekoppelt ist zur Abführung von Verlustwärme, die beim Betrieb der Einzelphotonendiode 3 sowie der Vorverarbeitungseinheit 6 resultiert.

In der beschriebenen Ausführungsform kann das Kühlelement 4 zweistufig ausgebildet sein mit zwei seriell hintereinander angeordneten Kühlelementeinheiten 42a, b, welche insbesondere jeweils als Peltierelement ausgebildet sein können, wobei die zweite, warme Seite 45 des ersten Kühlelements 42a an der ersten, d. h. kalten Seite der zweiten Kühlelementeinheit 42b anliegt, deren zweite, d. h. warme Seite die zweite Seite 41 des gesamten Kühlelements darstellt und an einen Kühlkörper 21 thermisch angekoppelt ist, d. h. an diesem anliegt zur Abgabe der aufgenommenen Wärmeenergie an die Umgebung. Hierzu kann der Kühlkörper 21 zugeordnete Kühlrippen 21a aufweisen, die sich etwa senkrecht von der Wandung des Kühlkörpers 21 nach außen erstrecken können. Wie aus Figur 1 ersichtlich, kann vorgesehen sein, dass die wirksame Fläche der ersten Kühlelementeinheit bzw. der ersten Kühlstufe 42a zur Verringerung der Baugröße bzw. des Gehäuseinnenraums 20 geringer ist als die wirksame Fläche der zweiten, mit dem Kühlkörper 21 gekoppelten Kühlelementeinheit 42b.

In der beschriebenen Ausführungsform kann das Gehäuse 2 der erfindungsgemäßen Photonendetektionsvorrichtung 1 etwa viereckig ausgebildet sein mit einer z.B. etwa quadratischen Grundfläche, wobei der Kühlkörper 21 sich aus einem Bodenabschnitt 22 und einem sich vom Bodenabschnitt erstreckenden und umlaufenden Seitenabschnitt 23 zusammensetzen kann, die innenseitig einen Abschnitt des Gehäuseinnenraums 20 begrenzen und insbesondere die beiden Kühlstufen in Form der Kühlelementeinheiten 42a, b aufnehmen können.

In der beschriebenen Ausführungsform kann vorgesehen sein, dass stirnseitig am freien Ende des Seitenabschnitts 23 des Kühlkörpers 21 ein zweiter Leiterplattenabschnitt 90b angeordnet ist, der somit an dem Kühlkörper thermisch zur Abgabe von Verlustwärme angekoppelt sind und der wie der erste Leiterplattenabschnitt 90a als Keramikleiterplatte mit hohem Wärmeleitungskoeffizienten ausgebildet sein kann.

Dabei kann vorgesehen sein, dass der zweite Leiterplattenabschnitt 90b elektrische Bauelemente einer der Vorverarbeitungseinheit 6 nachgeschalteten Auswerteeinheit 7 trägt, deren Abwärme über die thermische Kopplung des Leiterplattenabschnitts 90b an den Kühlkörper 21 abgebbar ist.

Demgegenüber können in der beschriebenen Ausführungsform auf dem z.B. diametral gegenüberliegenden Bereich des Leiterplattenabschnitts 90b elektrische Bauelemente einer Schaltung 81 einer GPS-Einrichtung 8 angeordnet sein, die wie die vorgenannten elektrischen Bauelemente innerhalb des Geräteinnenraums 20 der erfindungsgemäßen Photonendetektionsvorrichtung 1 angeordnet sein können. Zum Empfang von GPS-Signalen kann die GPS-Schaltungsanordnung 8 eine außen am Gehäuse 2 angebrachte GPS-Antenne 80 aufweisen. Die angegebene GPS-Schaltungsanordnung dient in der beschriebenen Ausführungsform zur Bereitstellung einer eigenständigen Phasen- und Frequenzreferenz auf der Basis von GPS-Signalen, z.B. für die Zeitsynchronisation einer Mehrzahl von erfindungsgemäßen Photonendetektionsvorrichtungen 1, um diesbezügliche Detektionssignale zeitlich einander zuzuordnen, worauf untenstehend noch näher eingegangen wird.

Zur Bereitstellung eines Photoneneintritts in das Innere des Gehäuses 2 der erfindungsgemäßen Photonendetektionsvorrichtung 1 ist ein optisches Eintrittselement 5, hier in Form einer planparallelen Platte vorgesehen, welche sich an einer Mehrschicht-Isolationsanordnung 100 abstützt, die eine Innenwandung 102 und eine zu dieser beabstandet angeordneten Außenwandung 101 aufweist mit einer dazwischen angeordneten Isolationsschicht 103, welche beispielsweise ein Vakuum oder ein Gas umfassen kann. In der beschriebenen Ausführungsform kann die Mehrschicht-Isolationsanordnung 100 direkt auf dem Leiterplattenabschnitt 90b aufsitzen, so dass der Innenraum 20 des Gehäuses 2 gasdicht gegen die Umgebung abgeschottet ist. Dabei kann vorgesehen sein, dass der zweite Leiterplattenabschnitt 90b durch eine ringförmige Leiterplatte einstückig bereitgestellt sind, insbesondere mit kreisförmigem oder viereckigem, insbesondere quadratischem Querschnitt. In der beschriebenen Ausführungsform kann in dem Gehäuseinnenraum 20 ein bezüglich der zu detektierenden Photonen nicht absorbierenden Gas, das darüber hinaus als Isolationsmedium wirkt, angeordnet sein.

In der in Figur 1 angegebenen Ausführungsform einer erfindungsgemäßen Photonendetektionsvorrichtung 1 sind sowohl die Einzelphotonendiode als auch die Vorverarbeitungseinheit und die Auswerteeinheit innerhalb eines Detektionsbereichs angeordnet, der hier den gesamten Gehäuseinnenraum 20 des Gehäuses 2 umfasst. Zur Beschränkung dieses Detektionsbereichs und damit zur Verminderung des Aufwandes einer thermischen Isolierung des Detektionsbereichs gegenüber anderen Abschnitten der erfindungsgemäßen Vorrichtung kann vorgesehen sein, dass insbesondere die Auswerteeinheit als auch gegebenenfalls Abschnitte der Vorverarbeitungseinheit entweder außerhalb des Gehäuseinnenraums 20 oder abgetrennt zum Detektionsbereich angeordnet sind.

Eine beispielhafte Signalverarbeitung des von der Einzelphotonendiode 3 aufgenommenen Erfassungssignals über die obenstehend angegebene Vorverarbeitungseinheit 6 und eine sich daran anschließende Auswerteeinheit 7 wird nachfolgend mit Bezug auf Figur 2 erläutert, die eine zweckmäßige Verschaltung von Einzelphotonendiode, Vorverarbeitungseinheit und Auswerteeinheit mit zugeordneten elektronischen Bauelementen zeigt. Mit der angegebenen Signalverarbeitungskette kann aus dem extrem schwachen Detektorsignal der Einzelphotonendiode 3 ein für die nachfolgende digitale Verarbeitung hinreichend hoher und langer Impuls bei möglichst geringem Jitter erzeugt werden.

Der von der Einzelphotonendiode 3 bei der Erfassung eines Einzelphotons erzeugte Strompuls in Höhe von beispielsweise etwas mehr als 10 µA und einer Anstiegszeit im Bereich von 100 ps wird über die in Figur 2 angegebene R1/C1-Verschaltung an den Eingang eines Transimpedanzverstärkers 60 angelegt. Dieser Transimpedanzverstärker 60 weist ein sehr schnelles Antwortverhalten auf und wandelt das Eingangssignal am Eingang in zwei inverse Einzelsignale Out-, Out+ eines differenziellen Ausgangs mit einer Pulshöhe von einigen 10 mV um.

Da die beiden Ausgänge des Transimpedanzverstärkers 60 eine temperaturabhängige Offset-Spannung aufweisen, wird vorzugsweise dieses Offset durch das Vorsehen einer jeweiligen kapazitiven Kopplung am Ausgang des Transimpedanzverstärkers 60 mittels der angegebenen Kondensatoren 61, b entfernt und die beiden analogen Signale auf die Eingänge In+/In- einer als Komparator ausgebildeten A/D-Wandlereinrichtung 63 geschaltet, welcher die analogen Eingangssignale in ein digitales Ausgangssignal wandelt. Wie aus Figur 2 ersichtlich, wird in der beschriebenen Ausführungsform über eine Spannungsquelle 62 eine vorzugsweise einstellbare Triggerschwelle der Schaltung auf das negative Ausgangssignal des Transimpedanzverstärkers 60 aufgeschaltet. Zweckmäßigerweise wird die Triggerschwelle gerade so eingestellt, dass die A/D-Wandlereinrichtung 63 durch Schaltungsrauschen gerade nicht mehr triggert, gleichzeitig jedoch auch keine Photonen-Erfassungspulse unterdrückt werden.

Das digitale Ausgangssignal der A/D-Wandlereinrichtung 63 bzw. des Komparators wird nachfolgend auf eine Digitalsignal-Konditionierschaltung 64 gegeben, in welcher das Digitalsignal in ein weiters Digitalsignal umgewandelt wird, das mit üblichen Digitalschaltungen verarbeitbar ist. Hierzu kann die Digitalsignal-Konditionierschaltung 64 ein mit einem weiteren ultraschnellen Komparator aufgebautes Monoflop (monostabile Kippstufe) umfassen, das die Pulse der A/D-Wandlereinrichtung 63 verlängert, so dass sie von einer nachfolgenden Digitalschaltung verarbeitet werden können. Zu diesem Zweck kann die Konditionierschaltung 64 einen hochohmigen Spannungsteiler und eine kapazitive Ankopplung des von der A/D-Wandlereinrichtung abgegebenen Ausgangssignals aufweisen, um eine feste, vorzugsweise einstellbare und von Null verschiedene Triggerschwelle des Monoflops einzustellen. Wie angegeben, kann das Ausgangssignal D des Monoflops als Detektionssignal für die weitere digitale Datenverarbeitung bereitgestellt werden.

Wie dem Fachmann bekannt, sind bei der Verwendung der erfindungsgemäßen Photonendetektionsvorrichtung 1 in der Quantenkryptographie eine Mehrzahl derartiger Photonendetektionsvorrichtungen notwendig. Zur zeitlichen Synchronisation der jeweiligen Detektionssignale der einzelnen Photonendetektionsvorrichtungen 1 können diese jeweils eine GPS-Einrichtung 8 umfassen, siehe Figur 1 mit den dort angegebenen Bauelementen einer GPS-Antenne 80 und einer GPS-Signalverarbeitungsschaltung 81 zur Bereitstellung einer Phasen- und Frequenzreferenz auf der Basis von GPS-Signalen.

Je nach Ausführungsform kann die Vorverarbeitungseinheit 6, siehe Figur 1, die der Diode 3 nachgeschalteten Bauelemente bis einschließlich der A/D-Wandlereinrichtung 63 aufweisen, so dass in dieser Ausführungsform die Vorverarbeitungseinheit ein digitales Ausgangssignal abgibt, das in der Auswerteeinheit mittels der Konditionierschaltung 64 in ein von nachfolgenden Digitalschaltungen handhabbares Digitalsignal umgewandelt wird. Letztlich kann jedoch auch die Digitalsignal-Konditionierschaltung 64 in der Vorverarbeitungseinheit 6 angeordnet bzw. von dieser umfasst sein, so dass in dieser Ausführungsform die Auswerteeinheit in der Vorverarbeitungseinheit integriert ist. In einer anderen Ausführungsform kann jedoch auch vorgesehen sein, dass die Vorverarbeitungseinheit einen differenziellen Ausgang in Form des differenziellen Ausgangs des Transimpedanzverstärkers 60 aufweist, so dass in dieser Ausführungsform der Photonendetektor 3 und der Transimpedanzverstärker 60 in der Ausführungsform der Figur 1 auf dem Platinenabschnitt 90a und damit auf dem Höchstkühlabschnitt angeordnet sind. In dieser Ausführungsform können dann die nachfolgenden elektronischen Bauteile zur Verarbeitung der Photonendiodensignale in die Auswerteeinheit angeordnet sein.

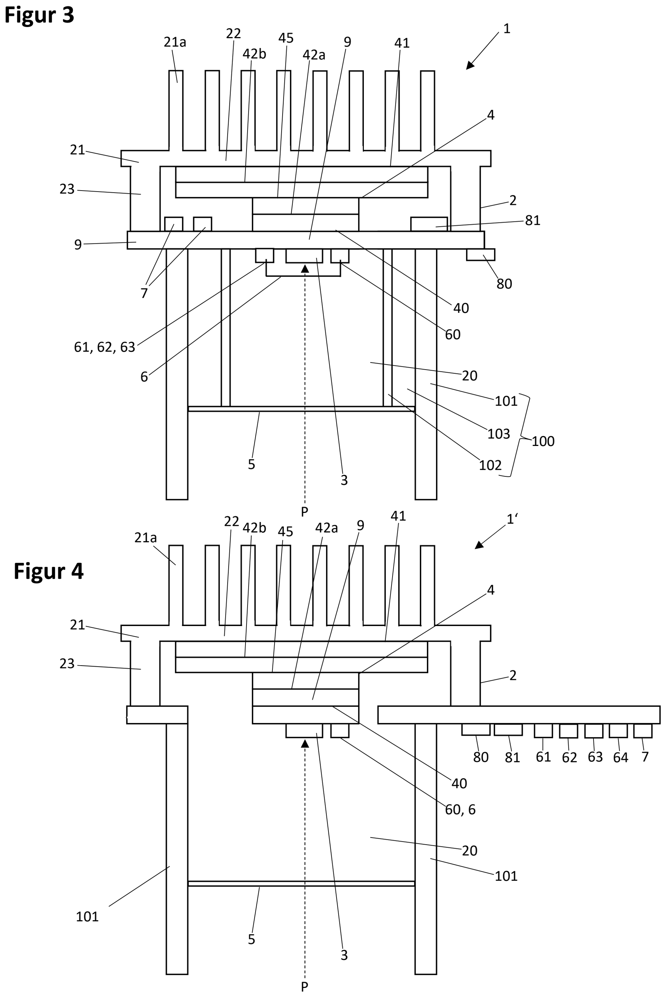

Figur 3 zeigt eine weitere Ausführungsform einer erfindungsgemäß gestalteten Photonendetektionsvorrichtung 1, die sich von der Photonendetektionsvorrichtung 1 der Figur 1 dadurch unterscheidet, dass statt einer Mehrzahl von voneinander beabstandeten Leiterplattenabschnitten, auf welchen die Einzelphotonendiode, die Vorverarbeitungseinheit bzw. die Auswerteeinheit angeordnet ist, eine gemeinsame Leiterplatte, insbesondere eine gemeinsame Keramikleiterplatte 9 vorgesehen ist, welche an einer ersten Seite die Einzelphotonendiode sowie die Vorverarbeitungseinheit trägt und an einer zweiten, der ersten Seite gegenüberliegenden Seite der Leiterplatte 9 die elektronischen Bauteile bzw. Verschaltungen der Auswerteeinheit sowie der GPS-Einrichtung. In dieser Ausführungsform erfolgt der Wärmeabtrag von der Auswerteeinheit 7 nicht allein über den Kontakt zum Kühlkörper 21, sondern darüber hinaus über die gemeinsame Leiterplatte 9 direkt zum Kühlelement 4. Die weiteren Gestaltungen der Photonendetektionsvorrichtung 1 gemäß Figur 3 können identisch zu den mit Bezug auf die Figuren 1, 2 beschriebenen Ausführungsformen ausgebildet sein.

Figur 4 zeigt in einer Prinzipdarstellung eine weitere erfindungsgemäß gestaltete Photonendetektionsvorrichtung 1, die sich in Bezug auf den Aufbau des Gehäuseinnenraums und die Anordnung von elektronischen Bauteilen der Vorverarbeitungseinheit 6 und der Auswerteeinheit 7 zur Ausführungsform der Fig. 1 unterscheidet. In der Darstellung sind entsprechende Bauteile relativ zu der Bezeichnung der Figur 1 beibehalten, wobei im Folgenden allein auf die Unterschiede eingegangen wird. In der Ausführungsform der Figur 4 weist der Gehäuseinnenraum 20 einen einzelnen Bereich dadurch auf, dass auf die Innenwandung 102 verzichtet wurde, siehe Figur 1 und damit der Isolationsabschnitt 103 entfällt. Im Gehäuseinnenraum 20 der Photonendetektorvorrichtung 1' sind sowohl der Photonendetektor 3 als auch die Vorverarbeitungseinheit 6 in direktem thermischen Kontakt zur Kühleinrichtung 4 angeordnet. Je nach Ausführungsform kann der Photonendetektor und/oder die Vorverarbeitungseinheit 6 wie in Figur 4 angegebenen mittels einer Leiterplatte 9 an die Kühleinrichtung 4 angekoppelt sein, es liegt jedoch auch im Rahmen der Erfindung, den Photonendetektor bzw. die Einzelphotonendiode und/oder die Vorverarbeitungseinheit 6 direkt mit der kalten Seite der Kühleinrichtung 4 zu verbinden. In dieser beschriebenen Ausführungsform umfasst die Vorverarbeitungseinheit 6 allein den Vorverstärker in Form des Transimpedanzverstärkers 60 während die Koppelkondensatoren 61, die Spannungsquelle 62, die A/D-Wandlereinrichtung bzw. der Komparator 63 sowie die Konditionierschaltung 64 zusammen mit der Auswerteeinheit 7 außerhalb des Gehäuses, vorliegend an einer Seitenwandverlängerung des Gehäuses angeordnet sind. Insofern können die Bauteile 61, 62, 63 und 64 auch als Bauteile der Auswerteeinheit angeordnet sein. Gleiches gilt für die beschrieben GPS-Antenne 80 sowie die GPS-Verarbeitungsschaltung 81 zur Bereitstellung der angegebenen Phasen- und Frequenzreferenz zur Ermittlung des Detektionssignals. Die Ausführungsform der Figur 4 zeichnet sich aufgrund der Auslagerung einer Vielzahl von elektronischen Bauelementen aus dem Gehäuseinnenraum 20 des Detektorgehäuses 2 durch eine mögliche sehr kompakte Gestaltung aus, bei welcher die tatsächlich temperaturkritischen Bauteile des Photonendetektors und des Vorverstärkers innerhalb des Gehäuses angeordnet sind.

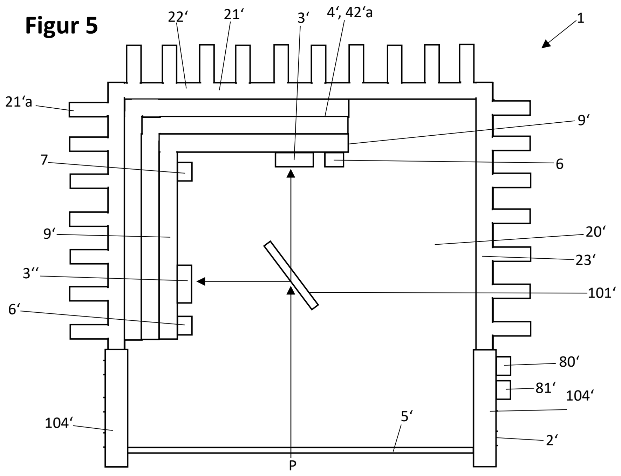

Figur 5 zeigt eine weitere Ausführungsform einer erfindungsgemäß gestalteten Photonendetektionsvorrichtung 1, wie sie insbesondere zur Verwendung in der Quantenkryptographie zur Festlegung eines abhörsicheren Schlüssels zum Verschlüsseln von Daten zur Anwendung kommen kann. In einem solchen Verfahren kann es beispielsweise notwendig sein, Einzelphotonen unter vier unterschiedlichen Polarisationsrichtungen zu detektieren, wobei in der Photonendetektionsvorrichtung 1 der Figur 4 Photonen zweier unterschiedlicher Polarisationsrichtungen erfassbar sind, so dass mit einer Hintereinanderschaltung zweier derartiger erfindungsgemäß gestalteter Photonendetektionsvorrichtungen eine Gesamtvorrichtung aufbaubar ist, welche die notwendige Funktionalität bezüglich der Erfassung einzelner Photonen bereitstellt.

Die erfindungsgemäße Photonendetektionsvorrichtung 1 der Figur 5 weist zwei Einzelphotonendioden 3', 3'' auf, die auf einer gemeinsamen Leiterplatte 9' angeordnet sind. Ein gemeinsames Kühlelement 4', das in dieser Ausführungsform als einzelne Kühlelementeinheit 42'a ausgebildet sein kann, ist mit seiner kalten Seite in thermischem Kontakt mit der gemeinsamen Leiterplatte 9' angeordnet, wobei die warme Seite des Kühlelements 4' in thermischem Kontakt zu einem Kühlkörper 21' angeordnet ist. Zur verbesserten Abgabe der Wärme weist der Kühlkörper 21' an seiner Außenseite Kühlrippen 21'a auf. Der Kühlkörper 21' weist einen Bodenabschnitt 22' und einen sich davon abstützenden, umlaufenden Seitenabschnitt 23' auf, an den sich eine Außenwandung 104' anschließt, wobei der durch das Kühlelement 4' und die Außenwandung 104' gebildeten Gehäuseinnenraum 20' durch ein optisches Eintrittselement 5 geschlossen ist. Der Gehäuseinnenraum 20' kann wiederum mit einem inerten oder trockenen Gas gefüllt sein.

In der beschriebenen Ausführungsform ist für jede der beiden Einzelphotonendioden 3', 3'' eine jeweilige Vorverarbeitungseinheit 6', 6'' vorgesehen, welche das Erfassungssignal der jeweiligen Einzelphotonendiode 3', 3'' vorverarbeitet. In der beschriebenen Ausführungsform weist die Vorrichtung eine gemeinsame Auswerteeinheit 7 und gegebenenfalls eine gemeinsame GPS-Einrichtung 8 zur Synchronisation der Zeitbasen zu den Detektionssignalen auf. Dabei kann am Eingang der Auswerteeinheit ein Multiplexer vorgesehen sein, mit welchem das jeweilige Ausgangssignal der Vorverarbeitungseinheiten 6', 6'' (vorstehend als Zwischensignal bezeichnet) auf die Auswerteschaltung der Einheit 7 aufschaltbar ist.

Um ein über das optische Eintrittselement 5, das wiederum beispielsweise als planparallele Platte oder auch als abbildende Optik ausgebildet sein kann, in den Gehäuseinnenraum 20' eintretendes Licht in Bezug auf seine Polarisation zu differenzieren, weist die Photonendetektionsvorrichtung 1 der Figur 5 einen polarisierenden Stahlteiler 110' auf, welcher auftreffende Photonen beispielsweise dahingehend separiert, dass Licht mit einer Polarisation senkrecht zur Zeichnungsebene der Figur 5 auf die Einzelphotonendiode 3' durchgelassen und Licht mit einer Polarisation parallel zur Zeichenebene der Figur 5 auf die Einzelphotonendiode 3" umgelenkt wird.

Es sei bemerkt, dass je nach Ausführungsform die in der Vorverarbeitungseinheit 6 und der Auswerteeinheit 7 angeordneten elektronischen Bauelemente wie in Bezug auf die Ausführungsformen der Figuren 1, 2 unterschiedlich sein können. Beispielsweise kann in einer Ausführungsform vorgesehen sein, dass in der Vorverarbeitungseinheit 6', 6'' der Ausgang, der mit der nachfolgenden Auswerteeinheit verbunden ist, die Ausgänge eines Transimpedanzverstärkers 60 anliegen, d. h. die Auswerteeinheit 7 dann beispielsweise die in Figur 2 angegebenen nachfolgenden Bauelemente umfasst, insbesondere die A/D-Wandlereinrichtung umfassend hier einen Komparator sowie die nachfolgende Konditionierschaltung 64 für das von der A/D-Wandlereinrichtung abgegebenen digitalen Signals. In einer anderen Ausführungsform kann auch vorgesehen sein, dass die Vorverarbeitungseinheiten 6',6'' der Einzelphotonendioden 3', 3'' neben dem Transimpedanzverstärker 60 auch die A/D-Wandlereinrichtung 63 umfasst, so dass deren Ausgang den Ausgang der Vorverarbeitungseinheit 6', 6'' in dieser Ausführungsform bereitstellt. In der Ausführungsform der Figur 5 umfasst die Auswerteeinheit 7 im Vergleich zu der mit Bezug auf die Figuren 1, 2 beschriebenen Gestaltungen einen zusätzlichen Schaltungsabschnitt zum Zusammenführen der Detektionssignale beider Einzelphotonendioden aufweist.

In einer weiteren Ausführungsform einer erfindungsgemäßen Photonendetektionsvorrichtung kann auch vorgesehen sein, in einem einzelnen Gehäuse bzw. einem Gehäuseinnenraum eines einzelnen Gehäuses vier Einzelphotonendioden vorzusehen mit jeweils einer zugeordneten Vorverarbeitungseinheit sowie einer gemeinsamen Auswerteeinheit, bei welcher ein in dem Innenraum über das optische Eintrittselement eintretende Licht zunächst über einen Intensitäts-Strahlteiler, insbesondere einen 50/50-Strahlteiler, aufgeteilt wird und ein erster 50%-Anteil dieses Licht auf einen ersten polarisierenden Strahlteiler gelenkt ist, an dessen Ausgängen Licht mit zueinander senkrecht orientierter Polarisation wie beschrieben erfassbar ist. Innerhalb des Innenraums des gemeinsamen Gehäuses trifft der zweite 50%-Anteil des vom 50/50-Strahlteilers differenzierten Lichtes zunächst auf eine Polarisationsdrehvorrichtung, die so eingestellt ist, dass die Polarisation um 45° gedreht wird und nachfolgend dann auf einen zweiten polarisierenden Strahlteiler, welcher das auftreffende Licht wie der erste polarisierende Strahlteiler in Licht mit zueinander senkrechter Polarisationen differenziert, wobei dieses Licht mit den dritten und vierten Einzelphotonendetektor erfasst wird. In dieser Ausführungsform kann vorgesehen sein, dass eine einzelne Auswerteeinheit im Gehäuseinnern vorgesehen ist, welche ein aus den Einzelsignalen der vier Einzelphotonendioden zusammengesetztes Detektionssignal bereitstellt.

### Bezugszeichenliste

- 1, 1': Photonendetektionsvorrichtung
- 2, 2': Gehäuse, Detektorgehäuse
- 3, 3', 3": Photonendetektor, Einzelphotonendiode
- 4, 4': Kühlelement, Kühleinrichtung
- 5, 5': Optisches Eintrittselement/Eintrittsfenster
- 6: Vorverarbeitungseinheit
- 7: Auswerteeinheit
- 8: GPS-Einrichtung
- 9, 9': Leiterplatte
- 20, 20': Gehäuseinnenraum
- 21, 21': Kühlkörper
- 21a, 21'a: Kühlrippen
- 22, 22': Bodenabschnitt
- 23, 23': Seitenabschnitt
- 40: erste Seite Kühlelement
- 41: zweite Seite Kühlelement
- 42a, b: Kühlstufe/Kühlelementeinheit
- 42'a: Kühlstufe/Kühlelementeinheit
- 45: zweite Seite der ersten Kühlelementeinheit
- 60: Transimpedanzverstärker
- 61a, b: Koppelkondensator
- 62: Spannungsquelle
- 63: A/D-Wandlereinrichtung/Komparator
- 64: Konditionierschaltung des digitalen Signals
- 80: GPS-Antenne
- 81: GPS-Verarbeitungsschaltung
- 90a, b: Leiterplattenabschnitt
- 100: Mehrschicht-Isolationsanordnung
- 101: Außenwandung
- 102: Innenwandung
- 103: Isolationsabschnitt
- 104': Seitenwandung
- 110: polarisierender Strahlteiler
- Ci: Kondensator
- Ri: Widerstand
- P: Photoneneinfall
- D: Detektionssignal

## Patentansprüche

1. Photonendetektionsvorrichtung (1) zur Detektion einzelner Photonen und Ausgabe eines Detektionssignals (D), das als Information eine Angabe von Zeitpunkten von Detektionsereignissen umfasst, wobei ein Detektionsereignis der Detektion eines einzelnen Photons entspricht, die Photonendetektionsvorrichtung (1) umfassend ein Detektorgehäuse (2, 2') mit einem Gehäuseinnenraum (20, 20'), in dem ein Photonendetektor (3, 3', 3''), insbesondere eine Avalanche-Photodiode [SPAD], und ein aktives Kühlelement (4, 4'), insbesondere ein Peltierelement, angeordnet sind, wobei ein Kühlkörper (21, 21') zum Ableiten von Abwärme des Kühlelementes (4, 4') an eine Umgebung des Detektorgehäuses vorgesehen ist, und der Kühlkörper zumindest abschnittsweise außerhalb des Gehäuseinnenraums (20, 20') angeordnet ist, wobei der Photonendetektor (3, 3', 3") an einer ersten Seite des aktiven Kühlelements (40) angeordnet und der Kühlkörper (21, 21') an einer zweiten Seite des aktiven Kühlelements (41) angeordnet ist, und das Detektorgehäuse (2, 2') ein optisches Eintrittselement (5, 5'), insbesondere umfassend insbesondere ein Glasmaterial oder ein optisches Kristallmaterial, aufweist, das zum Durchlassen eines ausgehend von der Umgebung der Photonendetektionsvorrichtung (1) auf das Eintrittselement (5, 5') auftreffenden Photons in den Gehäuseinnenraum (20, 20') ausgebildet ist, wobei die Photonendetektionsvorrichtung (1) eine an den Photonendetektor (3, 3', 3'') angeschlossene Vorverarbeitungseinheit (6) zur Umwandlung eines von dem Photonendetektor (3, 3', 3'') ausgegebenen analogen Signals, insbesondere eines analogen Pulssignals, in ein analoges oder digitales Zwischensignal und optional eine an die Vorverarbeitungseinheit (6) angeschlossene Auswerteeinheit (7) zur Erzeugung des Detektionssignals (D) aus dem analogen oder digitalen Zwischensignal der Vorverarbeitungseinheit (6) umfasst,
**dadurch gekennzeichnet, dass**
neben dem Photonendetektor zumindest die Vorverarbeitungseinheit (6) in dem Gehäuseinnenraum (20, 20') des Detektorgehäuses angeordnet ist, die eingangsseitig mit dem Photonendetektor verbunden ist.

2. Photonendetektionsvorrichtung (1) nach Anspruch 1,
**dadurch gekennzeichnet, dass**
die Vorverarbeitungseinheit (6) an der ersten (kühlen) Seite des aktiven Kühlelements (4) angeordnet ist.

3. Photonendetektionsvorrichtung (1) nach Anspruch 1 oder 2, **dadurch gekennzeichnet, dass**
das aktive Kühlelement (4, 4') mehrere aktive Kühlelementeinheiten (42a, b, 42'a) umfasst, wobei insbesondere eine der aktiven Kühlelementeinheiten (42a, b, 42'a) die erste Seite des aktiven Kühlelements (40) bereitstellt und eine andere der aktiven Kühlelementeinheiten (42a, b, 42'a) die zweite Seite des aktiven Kühlelements (41) bereitstellen, wobei vorzugsweise
die aktiven Kühlelementeinheiten (42a, b, 42'a) jeweils eine Wärmeabgabeseite und eine Wärmeaufnahmeseite aufweisen und wobei eine erste der aktiven Kühlelementeinheiten (42a, b, 42'a) mit ihrer Wärmeabgabeseite mit der Wärmeaufnahmeseite einer zweiten der aktiven Kühlelementeinheiten (42a, b, 42'a) verbunden ist, wobei insbesondere die Einzelphotonendiode (3, 3', 3'') an der Wärmeaufnahmeseite der ersten aktiven Kühlelementeinheit (42a, b, 42'a) angeordnet ist und/oder die Wärmeabgabeseite der zweiten aktiven Kühlelementeinheit (42a, b, 42'a) eine größere Oberfläche aufweist als die Wärmeaufnahmeseite der ersten aktiven Kühlelementeinheit (42a, b, 42'a).

4. Photonendetektionsvorrichtung (1) nach einem der vorangegangenen Ansprüche,
**dadurch gekennzeichnet, dass**
der Gehäuseinnenraum (20, 20') einen durch das aktive Kühlelement (4, 4') gekühlten, insbesondere vom restlichen Gehäuseinnenraum (20, 20') thermisch isolierten, Detektionsbereich aufweist, wobei zumindest der Photonendetektor (3, 3', 3") in dem Detektionsbereich angeordnet ist, wobei vorzugsweise
die Vorverarbeitungseinheit (6) in dem Detektionsbereich des Gehäuseinnenraums (20, 20') angeordnet ist, wobei insbesondere die Auswerteeinheit (7) außerhalb des Detektionsbereichs im Innenraum (20, 20') des Detektorgehäuses, insbesondere außerhalb des Detektionsbereichs und außerhalb des Gehäuseinnenraums des Detektorgehäuses, angeordnet ist.

5. Photonendetektionsvorrichtung (1) nach Anspruch 4, **dadurch gekennzeichnet, dass**
der Photonendetektor (3, 3', 3") an einer ersten Seite eines ersten Leiterplattenabschnitts (90a) einer Leiterplattenanordnung, insbesondere eines ersten Leiterplattenabschnitts (90a) umfassend Keramik, angeordnet ist, wobei eine zweite Seite des ersten Leiterplattenabschnitts (90a) an der ersten Seite des aktiven Kühlelements (4, 4') angeordnet ist und wobei insbesondere der Photonendetektor (3, 3', 3") und/oder die Vorverarbeitungseinheit (6) an dem ersten Leiterplattenabschnitt (90a) der Leiterplattenanordnung angeordnet ist, wobei vorzugsweise
die ersten und zweiten Leiterplattenabschnitte (90a, b) durch zumindest einen thermischen Isolationsabschnitt (103) umfassend ein thermisch isolierendes Gas oder ein Vakuum, thermisch voneinander isoliert sind.

6. Photonendetektionsvorrichtung (1) nach Anspruch 4,
**dadurch gekennzeichnet, dass**
der Photonendetektor (3, 3', 3'') und/oder die Vorverarbeitungseinheit (6) in direktem Wärmekontakt ohne Zwischenlage auf einer kalten Seite des aktiven Kühlelements angeordnet ist.

7. Photonendetektionsvorrichtung (1) nach Anspruch 5,
**dadurch gekennzeichnet, dass**
die ersten und zweiten Leiterplattenabschnitte (90a, b) durch zumindest einen thermischen Isolationsabschnitt (103) umfassend ein thermisch isolierendes Gas oder ein Vakuum, thermisch voneinander isoliert sind.

8. Photonendetektionsvorrichtung (1) nach einem der Ansprüche 4, 5 oder 7,
**dadurch gekennzeichnet, dass**
der Detektionsbereich von dem ersten Leiterplattenabschnitt (90a), von dem Eintrittselement (5, 5') sowie von Seitenwänden begrenzt wird, wobei insbesondere der Detektionsbereich gasdicht von dem restlichen Gehäuseinnenraum (20, 20') isoliert ist, wobei vorzugsweise
der Detektionsbereich mit einem Gas, insbesondere einem inerten Gas und/oder einem getrockneten Gas, gefüllt ist oder ein Vakuum umfasst.

9. Photonendetektionsvorrichtung (1) nach Anspruch 8,
**dadurch gekennzeichnet, dass**
die Seitenwände des Detektionsbereichs eine Mehrschichtenanordnung aufweisen zur Bereitstellung einer thermischen und/oder gasdichten Isolation des Detektionsbereichs zur Umgebung der Photonendetektionsvorrichtung (1).

10. Photonendetektionsvorrichtung (1) nach einem der vorangegangenen Ansprüche,
**dadurch gekennzeichnet, dass**
die Vorverarbeitungseinheit (6) zumindest eine elektronische Komponente, insbesondere einen Vorverstärker (60) und/oder einen Komparator (63) und/oder einen Temperatursensor umfasst.

11. Photonendetektionsvorrichtung (1) nach einem der vorangegangenen Ansprüche,
**dadurch gekennzeichnet, dass**
die Auswerteeinheit (7) zumindest eine elektronische Komponente, insbesondere zumindest einen Mikroprozessor und/oder einen FPGA umfasst zur Verarbeitung des Ausgangssignals der Vorverarbeitungseinheit in das Detektionssignal, wobei vorzugsweise
die Auswerteeinheit (7) außerhalb des Detektorgehäuses angeordnet ist, wobei die Vorverarbeitungseinheit ausgangsseitig an die Auswerteeinheit (7) angeschlossen, insbesondere galavanisch angeschlossen ist.

12. Photonendetektionsvorrichtung (1) nach einem der vorangegangenen Ansprüche,
**dadurch gekennzeichnet, dass**
das Gehäuse (2, 2') zumindest eine Selbstzerstörungsvorrichtung, insbesondere umfassend eine Sollbruchstelle und eine in Wirkverbindung mit der Sollbruchstelle stehende Auslöseeinrichtung, aufweist, wobei die Selbstzerstörungsvorrichtung eingerichtet und ausgebildet ist, bei einem Öffnen des Gehäuses (2, 2') der Photonendetektionsvorrichtung (1) zumindest eine der im Gehäuse (2, 2') angeordneten Komponenten, insbesondere die Auswerteeinheit (7), der Photonendetektionsvorrichtung (1) zu zerstören.

13. Photonendetektionsvorrichtung (1) nach einem der Ansprüche 1 bis 12, **dadurch gekennzeichnet, dass** in dem Detektorgehäuse (2, 2') zumindest ein weiterer Photonendetektor (3, 3', 3''), insbesondere eine weitere Avalanche-Photodiode [SPAD], angeordnet ist, wobei der weitere an der ersten Seite des aktiven Kühlelements (4, 4')angeordnet ist, ferner ein optischer Strahlteiler (110) mit einem optischen Eingang und zwei optischen Ausgängen, wobei der optische Eingang des Strahlteilers (110) in Photonenrichtung hinter dem optischen Eintrittselement (5, 5') angeordnet ist, und wobei der erste Ausgang des Strahlteilers (110) optisch vor dem ersten Photonendetektor (3) und der zweite Ausgang des Strahlteilers (110) optisch vor dem weiteren Einzelphotonendetektor (3', 3") angeordnet ist, und wobei die Photonendetektionsvorrichtung(1) eine an den weiteren Photonendetektor (3', 3'') angeschlossene weitere Vorverarbeitungseinheit (6) zur Umwandlung eines von dem weiteren Photonendetektor (3', 3'') ausgegebenen analogen Signals in ein weiteres Zwischensignal aufweist, und die Vorverarbeitungseinheit (6) an die Auswerteeinheit (7) zur Erzeugung eines weiteres Detektionssignals (D) aus dem weiteren Zwischensignal angeschlossen ist.

14. Verfahren zur Detektion einzelner Photonen und zur Ausgabe eines Detektionssignals (D), das als Information eine Angabe von Zeitpunkten von Detektionsereignissen enthält, wobei ein Detektionsereignis der Detektion eines einzelnen Photons an einem Photonendetektor (3, 3', 3") einer Photonendetektionsvorrichtung (1) entspricht, wobei durch den Photonendetektor (3, 3', 3'') ein dem Detektionsereignis zugeordnetes analoges (Strom)Signal erzeugt wird und dieses analoge Signal an eine Vorverarbeitungseinheit (6) übermittelt wird, wobei durch die Vorverarbeitungseinheit (6) ein analoges oder digitales Zwischensignal aus dem analogen Signal des Photonendetektors (3, 3', 3") erzeugt wird und dieses Zwischensignal an eine Auswerteeinheit (7) übermittelt wird, wobei das Zwischensignal durch die Auswerteeinheit (7) zur eindeutigen Zuordnung von Information über den Zeitpunkt des Detektionsereignisses des einzelnen Photons zu diesem Detektionsereignis verarbeitet wird,
**dadurch gekennzeichnet, dass**
die Vorverarbeitungseinheit (6) und die Einzelphotonendiode (3, 3', 3") durch ein aktives Kühlelement (4, 4'), insbesondere ein gemeinsames Kühlelement (4, 4') gekühlt werden.

15. Entschlüsselungsvorrichtung zur Festlegung eines Quantenschlüssels zum Verschlüsseln von Daten, durch Detektion und Verarbeitung von einzelnen Photonen umfassend eine Mehrzahl von Photonendetektionsvorrichtungen (1) nach einem der Ansprüche 1 bis 13.
